# EUROPEAN PATENT SPECIFICATION

(11) **EP 1 528 018 B1**
(45) Date of publication and mention of the grant of the patent: **14.05.2008**
(21) Application number: 04077934.0
(22) Date of filing: 25.10.2004
(51) Int. Cl.: B65G 23/12

(54) **Conveyor and system comprising a number of conveyors**
Förderer und Förderanlage mit einer Anzahl derartigen Förderer
Convoyeur et système de convoyage comprenant plusieurs convoyeurs

(30) Priority: 31.10.2003 NL 1024683
(43) Date of publication of application: 04.05.2005
(73) Proprietor: W/M Systems B.V., 2661 EP Bergschenhoek (NL)
(72) Inventor: De Jager, Maarten, 2587 TX Den Haag (NL); Brugman, Thomas Gerardus, 2715 AN Zoetermeer (NL)
(74) Representative: van Westenbrugge, Andries

(56) References cited:
- EP-A- 0 668 012
- EP-A- 1 407 986
- DE-A- 3 734 560
- US-A- 3 536 185
- US-A- 4 473 150
- US-A- 5 364 039
- US-A1- 2002 179 414
- PATENT ABSTRACTS OF JAPAN vol. 2000, no. 20, 10 July 2001 (2001-07-10) & JP 2001 058712 A (MARUYASU KIKAI KK), 6 March 2001 (2001-03-06)
- PATENT ABSTRACTS OF JAPAN vol. 2003, no. 12, 5 December 2003 (2003-12-05) & JP 2003 221109 A (MARUYASU KIKAI KK), 5 August 2003 (2003-08-05)

## Description

The present invention relates to a conveyor system according to the preamble of claim 1.

A conveyor used in such a system is known from JP-2001058712, which discloses a conveyor belt where the drive roller is arranged in the return part. Two pressure rollers are arranged above the drive roller, which pressure rollers can be pressed against the roller with "energising means". As a result a high clamping force will continuously exist between the pressure roller and the drive roller, which increases wear.

DE 37 34 560 discloses a conveyor which has a drive roller that drives both the feed part and the return part. For this purpose there are pressure rollers acting both on the return part and on the feed part. The conveyor belt is arranged with a kink off the drive roller. As a consequence of the fact that the belt is not in contact around the drive roller, the construction shown in this publication requires a very high pressure between pressure roller and belt and between belt and drive roller for it to be possible to transport heavy loads with the belt.

EP 066 8012 discloses a conveyor belt that is not tensioned over the entire length thereof but is tensioned only at the drive. For this purpose there is a pressure roller, which clamps the belt against the roller, opposite the drive roller. The problem of stretching of the belt in the unloaded state is indeed prevented by this means, but it is not possible to prevent appreciable damage being inflicted on the belt at the location where pressure is exerted on it. After all, the construction must be made such that even with the maximum possible loading that occurs it is always guaranteed that the belt starts to move when the drive roller starts to rotate. Such a loading can be particularly high. Apart from the weight of the objects to be placed on the belt, such as pot plants, it has been found that a reduced pressure is possibly created locally beneath the conveyor belt and as a result sticking of the conveyor belt on the support occurs.

JP 2003221109 discloses a construction with a drive roller and a single pressure roller.

The aim of the present invention is to avoid the disadvantages described above and to provide a construction with drive roller and pressure rollers that always provides adequate drive for the return part depending on the loading. That is to say there has to be a low clamping force between pressure roller and drive roller in the case of relatively low loading and a higher pressure in the case of higher loading. Moreover, the construction must be suitable for moving the return part in two directions.

This aim is achieved with a system having the features according to claim 1.

According to the present invention when the drive roller is stationary only a low force is exerted on the drive roller by the pressure rollers when the belt is accommodated between them. This force is so low that hardly any damage to the belt occurs as a result. When the movement is started, the drive roller starts to rotate and as a result of the low grip between belt and drive roller the belt will be tensioned to some extent, the belt will be pressed onto said drive roller over the entire contact surface so that sufficient friction is produced between said drive roller and said belt to move said belt by means of said drive roller and one of the pressure rollers will move away from the drive roller as a result of said tension. As a result, according to the invention the other pressure roller will move towards the belt and there give rise to a gripping power of the belt on the drive roller. This gripping power is changed in relation to the tensile force that is produced in the belt by the loading of the belt conveyor. After all, the tensile force exerted on the belt gives rise proportionally to a pressure on the pressure roller located downstream, whilst a mechanism present converts this proportionately into a pressure exerted by said other pressure roller on the belt. As a result the pressure roller located upstream always generates precisely sufficient grip between the drive roller and the belt so as to press the belt with so much force onto the entire contact surface with said drive roller that the friction between these two is sufficient to maintain the tensile force in said belt.

By wrapping the belt around the pressure rollers over at least 90° the force produced in said belt can be converted in a well-controlled manner into a force on the pressure roller located upstream directed away from the drive roller. As a result even small variations in loading of the belt conveyor will directly result in precise raising or lowering of the pressure from the pressure roller located downstream on the belt. Because the belt is as a result pressed onto the drive roller with more or less force, the grip of said drive roller on said belt will likewise be directly and precisely increased or reduced.

Because the belt has been wrapped around the drive roller over more than 180°, sufficient pressure between said belt and said drive roller to provide sufficient frictional engagement between the two for driving said belt by said drive roller will already be built up with slight clamping of the belt between said drive roller and the pressure roller located downstream.

When loading on the belt conveyor decreases the tensile force in the belt decreases and consequently also the forces that act on the pressure rollers and the mechanism and these forces will be very small when the drive roller is stationary. In all cases the pressure from the pressure roller located downstream will be optimally low. As a result, wear of the belt and the moving parts is restricted to a minimum. When the direction of the drive roller is reversed, the two pressure rollers switch functions.

It will be understood that the pattern of movement of the one pressure roller described above has been greatly exaggerated. In practice, the movements concerned will be barely discernible, but the force exerted by the other pressure roller is indeed measurable.

According to the invention, one pressure roller is mounted on a pivot arm, the pivot pin thereof being essentially parallel to the axis of the pressure roller and drive roller. In this way the movement of the pressure roller away from/towards the drive roller can be achieved. According to a further advantageous embodiment two pivot arms that can move independently of one another are fitted, each for one of the two pressure rollers located opposite one another, and the movement of these arms is linked with one another. Such a link can comprise a spring or fixed link, but preferably comprises a combination thereof, that is to say a construction where there is a resilient movement during a first part of the travel and during a further stage of the travel there is a fixed link between the two arms. The combination of two pivot arms arranged opposite one another and coupled to one another, as described above, forms an abovementioned mechanism for the proportional conversion of a force exerted on the one pressure roller into a force with a different value exerted by the other pressure roller.

Because the conveyor belt does not have to be pretensioned with the present invention and during operation of the conveyor only the effective part of the conveyor is subjected to tensile loading, less stringent requirements have to be imposed on the material of the conveyor belt, compared with a permanently pretensioned conveyor belt.

A further aim of the present invention is to provide a system comprising a conveyor where less power is required to move objects along said conveyor. According to a further aspect of the present invention, this aim is achieved in that the width of the support in the direction perpendicular to the direction of movement of said conveyor belt is greater than the width of said conveyor belt. The less stringent requirements to be imposed in respect of the conveyor belt make it possible to use a conveyor belt that is appreciably narrower than usual. With an appreciable narrowing of a conveyor belt it is found that the problems described above with regard to sticking of the conveyor belt on the support hardly still arise, so that less power than usual is required. The width of a conveyor is usually fixed and is dependent on the products to be moved therewith. Even with the present invention the support in the direction perpendicular to the direction of movement of said conveyor belt is made approximately equally wide as the objects to be moved, but the conveyor belt is made substantially narrower. It has been found that the objects can be supported in a sufficiently stable manner by bearing on one or more points of the conveyor belt or conveyor belts.

The width of a conveyor is generally fixed and is dependent on the products to be moved therewith. The support is made at least equally as wide as the objects to be moved, but the conveyor belt is made substantially narrower. It has been found that the objects are supported in a sufficiently stable manner by bearing on one or more points of the conveyor belt or belts. It has also been found that as a result of the appreciable narrowing of the conveyor belts the problems described above with regard to sticking of the conveyor belt on the support hardly arise.

It must be understood that the conveyor belts can be moved in two opposing directions. Depending on this, the one pressure roller will press the belt against the drive roller or the other pressure roller will press the belt against the drive roller.

As a result of the clamping grip, tensile stress is no longer permanently applied to the belt but only during the movement thereof. The result of this is that the rate of stretch of the belt is reduced, the life of both the belt and other moving parts increases, the construction can be made more lightweight and simpler and it is not necessary to bring/to keep the conveyor belt under tension frequently.

The present invention can be implemented with a conveyor belt, where the support extends exposed on either side thereof and the objects are supported centrally. It is possible to use two or more conveyor belts, always with a distance between them. Because the conveyor belts do not have to be pretensioned no problems arise as a consequence of possible differences in length and stretch of the individual conveyor belts. In the intermediate region the support extends exposed. If the objects have a width that is greater than the centre-to-centre distance between the two or more conveyor belts, such objects will be supported exclusively by the conveyor belts and the support extends between them without the objects dragging over it. The support can optionally be made with a sunken portion at the location of the conveyor belt for guiding thereof. This is not necessary with the majority of applications.

The support can be reinforced by making this trough-shaped. That is to say, on one or both sides of the support there are reinforcing bodies that extend essentially perpendicularly thereto. According to an advantageous embodiment of the invention these extend upwards, so that a guide for the objects on the support is provided.

The subject conveyor has a wide variety of applications for moving objects. One of the examples is a conveyor for moving pot plants. More particularly, pot plant carriers are used in this application to prevent the pot plants falling over. Such carriers have a relatively large surface area that rests on the conveyor belts described above.

As a result of the large surface area a much more stable situation is obtained than that where a pot plant is placed directly on a belt.

The invention relates to a system comprising a number of the conveyors described above. In such a system such conveyors are alongside one another in parallel. These conveyors can be connected to a common feed or discharge in a preferred embodiment. Both individually operated and jointly operated pivot arms can be used with this arrangement.
Such a system has a common drive motor for multiple belt conveyors, as a result of which all related conveyor belts move simultaneously and in the same direction. With the individual control, the drive mechanism of each conveyor can be switched off and the belt, or belts, concerned can thus be stopped by moving each pressure roller of said conveyor a minimal distance away from the drive roller, optionally against a spring pressure.

The invention will be explained in more detail below with reference to illustrative embodiments shown in the drawing. In the drawing:
Fig. 1 shows, diagrammatically, a perspective view of a first embodiment of a conveyor according to the invention;
Fig. 2 shows, in side view, the drive thereof in detail; and
Fig. 3 shows a system according to the invention with various conveyors and common drive.

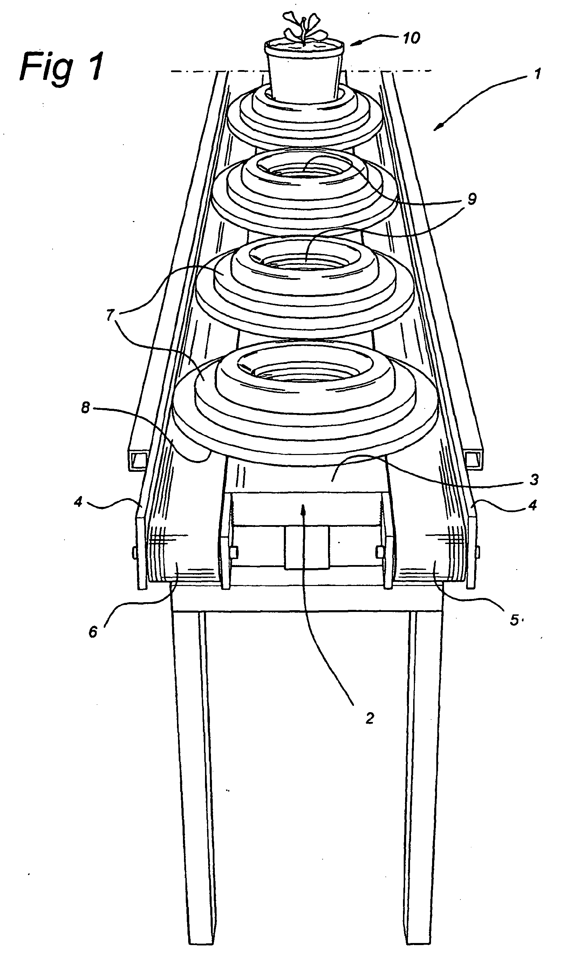

In Fig. 1 the conveyor incorporated in the system according to the invention is indicated in its entirety by 1. This consists of a trough indicated in its entirety by 2. The trough consists of a bearer or support 3, which is delimited on either side by upright bodies or edges 4. Conveyor belts 5 and 6 are arranged in the trough close to the upright edges. In the embodiment shown here the bottom of the trough can be flat. However, it is also possible to make the part of the bottom on which no conveyor belt bears sunken or possibly somewhat raised.

It can be seen from Fig. 1 that there are a number of plant carriers 7. These preferably consist of a plastic material with a support surface 8. The dimensions of the support surface 8 are such that this is accommodated more or less accurately between the upright edges 4 of the trough 2. The support surface 8 rests on the two conveyor belts 5 and 6. Furthermore, the plant carrier is provided with a seat 9. This can be made stepped to accommodate differently sized pots for pot plant 10.

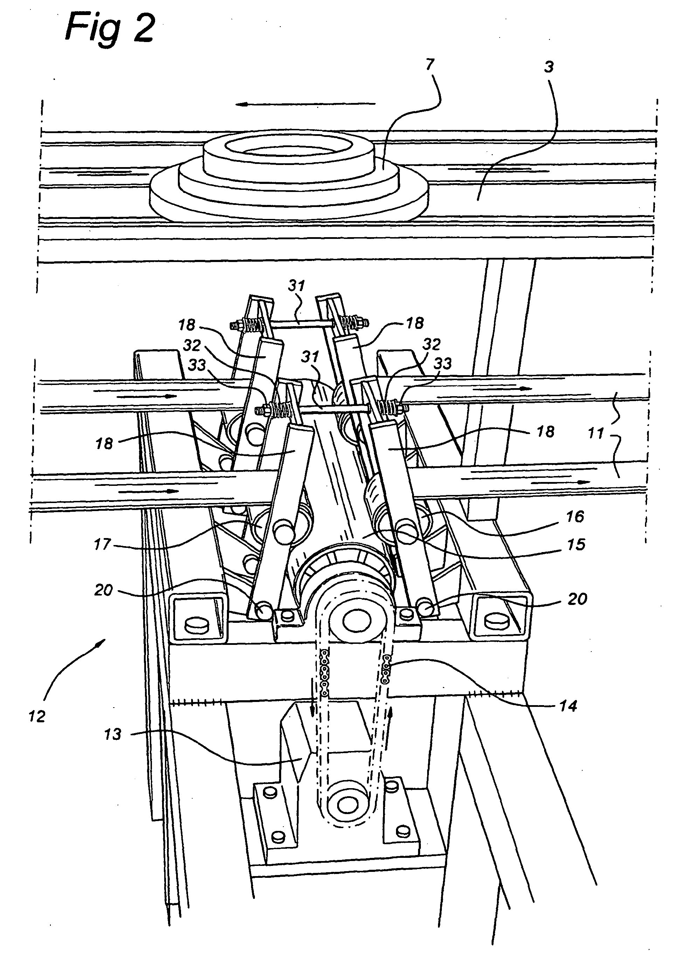

Conveyor belts 5 and 6 each have a return part that is always indicated by 11 (Fig. 2). The drive takes place on this return part. This drive is indicated in its entirety by 12. In the illustrative embodiment shown in Figs 1 and 2 the drive consists of a drive motor 13 that drives a drive roller 15 via a transmission 14. The return part is wrapped around the drive roller 15. The angle is at least 180° and more particularly more than 270° of the arc that is described by the drive roller. There are pressure rollers 16 and 17. Both are mounted on a tensioning arm 18 that is fixed to the frame with joint 20. Tensioning arms 18 are linked to one another via a rod 31 and springs 32 with stops 33. The width of the drive roller 15 shown and the two pressure rollers 16, 17 is greater than that of the return part, so that it is certain that the full width of said return part comes into engagement with said drive roller.

This construction functions as follows. If the belt in Fig. 2 has to be moved to the right in the direction of the arrow, the drive roller 15 is rotated anti-clockwise. As a result of the increase in the tensioning force on the left-hand part of the belt the left-hand pressure roller 17 will move to the left. As a result rod 31 will also move to the left and during a first stage of the travel a gradually increasing pressure will be exerted by the springs 32 on roller 16 in the direction of drive roller 15, as a result of which the belt is clamped increasingly more firmly against the drive roller 15. This pressure is in general sufficient to start and maintain the movement of the belt. However, should this pressure between roller 16 and drive roller 15 be insufficient in extreme situations, the left-hand part will then be further tensioned and pressure roller 17 will move further to the left and the roller 16 will press the part 11 onto the drive roller 15 with more force, as a result of which it can be ensured that driving of the belt takes place.

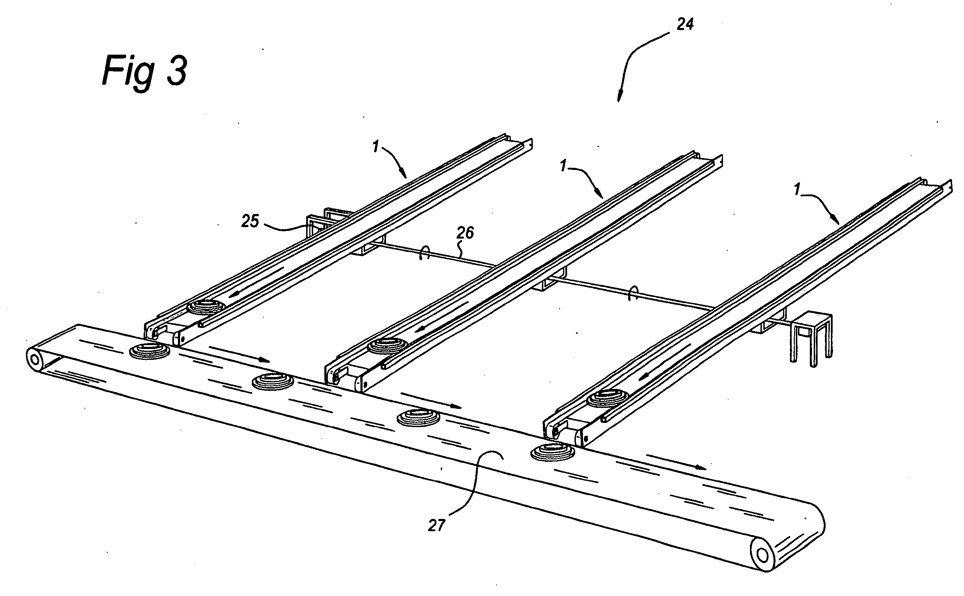

In the embodiment shown the drive roller 15 is common for several return parts 11 and the pressure rollers 16, 17 are individual for each return part. In an embodiment with separate drive rollers 15, which is not shown, these drive rollers are permanently joined to a common drive shaft. Because the mechanism with rods 31 and pressure rollers 16, 17 can always be made individual, the optimum tension is always selected for each belt of, for example, each conveyor, or each set of belts for each conveyor (see Fig. 3). That is to say, if relatively low loading acts on a conveyor belt during common rotation of roller 15, in the example shown above roller 17 is moved to the left only over a small distance, whilst a much greater force can be applied to an adjacent conveyor belt moved by the same roller 15 because the pressure roller 17 effective for this is moved further to the left.

It is also possible to switch off the pressure rollers 16, 17 per conveyor. That is to say it is possible to provide a "neutral" position by moving each pressure roller of said conveyor a minimal distance away from the drive roller against the spring pressure, as a result of which the drive roller 15 is not able to exert sufficient grip on the belt to drive this. This movement can be effected with any mechanism engaging on arms 18. As a result of removal of the force for motion, the pressure rollers are able to move towards the drive roller again and the return part will again press on the drive roller, as a result of which this drive roller is again able to exert sufficient grip on this return part to drive this.

A conveyor as described above can be used in a greenhouse or the like and the crop concerned can be transported to the end thereof depending on the requirements.

A system consisting of various conveyors as described above is shown diagrammatically in Fig. 3. Such a system is indicated in its entirety by 24.

With this system there is a common motor 25. The drive rollers 15 concerned are always driven with drive shafts 26. With such an embodiment all return parts 11 will be permanently pressed onto the drive roller 15 concerned by a pressure roller 16, 17. The pressure rollers can optionally be switched off individually per conveyor in some way or other. That is to say when drive motor 25 runs all conveyor belts will be driven, unless the pressure rollers concerned have been switched off. Only those conveyor belts for which the relevant conveyor does not have to be used for a prolonged period will not be driven by switching off the pressure rollers. This switching off can be effected, for example, electrically or manually by engaging on the relevant tensioning arms 18. A common take-off conveyor is indicated by 27 as an example.

Although the invention has been described above with reference to a preferred embodiment, it will be immediately understood by those skilled in the art that many variants and applications are possible that are obvious after the above and fall within the scope of the appended claims.

## Claims

1. System comprising a number of conveyors, wherein each conveyor comprises an elongated flat support (3) with, arranged thereon, a movable conveyor belt (5, 6) for objects, said conveyor belt having a return part (11), as well as a drive (12), wherein said drive comprises a drive roller (15) and, in each case, a pressure roller (16, 17) on either side of said drive roller (15), said pressure rollers being mounted on a pivot arm (18) and linked to one another, wherein the shafts of the drive roller and the pressure rollers are essentially parallel, said pressure rollers (16, 17) are on both sides of said drive roller in said return part in the direction of movement of said return part (11) and said conveyor belt (5, 6) is arranged such that it is guided around said drive roller over at least 180° and around each of said pressure rollers over at least 90°, and wherein said drive rollers (15, 16, 17) are linked such that when the tensile force in said return part is increased this part moves the pressure roller concerned away from the drive roller and moves the other pressure roller towards said drive roller, as a result of which the latter pressure roller presses the belt onto the drive roller with more force, **characterised in that** a common drive motor (25), is provided which drives each of said drive rollers (15), and said drive being individually controllable for each conveyor.

2. System according to Claim 1, wherein said pressure rollers (16, 17) are each mounted on a pivot arm (18) and wherein said pivot arms are linked to one another by a link rod (31).

3. System according to one of the preceding claims, wherein the width of the support (3) in the direction perpendicular to the direction of movement of said conveyor belt (5, 6) is greater than the width of said conveyor belt.

4. System according to Claim 3, comprising a single conveyor belt where the support extends beyond said conveyor belt on either side thereof.

5. System according to one of Claims 3, 4, comprising two conveyor belts (5, 6) located some distance apart, wherein the support (3) extends between them.

6. System according to Claim 5, comprising a common drive mechanism (12) for said two conveyor belts.

7. System according to one of the preceding claims, wherein said objects comprise pot plant carriers (7) with a greater breadth than the width of said conveyor belt.

8. System according to Claim 7, wherein said pot plant carriers comprise disc-shaped carriers with a central seat (9) for a pot plant (10).

9. System according to one of the preceding claims, wherein said support is provided with upright reinforcing bodies (4) adjoining it.

10. System according to one of the preceding claims, wherein the support is provided with a sunken portion.

11. System according to one of the preceding Claims, having a feed or discharge (27) connected to said conveyors.

## Patentansprüche

1. Verfahren umfassend eine Anzahl von Fördergeräten, wobei jedes Fördergerät eine längliche flache Stütze (3) umfasst, mit, darauf angeordnet, einem beweglichen Transportband (5,6) für Objekte, wobei das Transportband ein Rückteil (4) sowie einen Antrieb (12) hat, wobei der Antrieb eine Antriebsrolle (15) und, in jedem Fall, eine Druckrolle (16,17) an jeder Seite der Antriebsrolle (15) hat, wobei die Druckrollen auf einem Dreharm (18) angeordnet und miteinander verbunden sind, worin die Schäfte der Antriebsrolle und der Druckrollen wesentlich parallel sind, wobei die Druckrollen (16,17) an beiden Seiten der Antriebsrolle im Rückteil in der Bewegungsrichtung des Rückteils sind und das Transportband derartig angeordnet ist, dass es rund um die Antriebsrolle über zumindest 180° und rund um jede der Druckrollen über zumindest 90° geführt wird, und wobei die Antriebsrollen (15,16,17) derartig verbunden sind, dass wenn die Zugkraft im Rückteil zugenommen hat, dieses Teil die betreffende Druckrolle von der Antriebsrolle weg bewegt und die andere Druckrolle in die Richtung zur Antriebsrolle bewegt, mit dem Resultat dass die letztgenannte Druckrolle das Band mit mehr Kraft auf die Antriebsrolle drückt, **dadurch gekennzeichnet, dass** ein gemeinsamer Antriebsmotor (25) vorgesehen wird, welcher jede der Antriebsrollen (15) antreibt, und wobei der Antrieb (1) für jedes Fördergerät einzeln kontrollierbar ist.

2. Verfahren nach Anspruch 1, wobei die Druckrollen (16,17) jede auf einem Dreharm montiert sind und wobei die Dreharme durch eine Verbindungsstange (31) miteinander verbunden sind.

3. Verfahren nach einem der vorhergehenden Ansprüche, wobei die Breite der Stütze (3) in der Richtung senkrecht auf der Bewegungsrichtung des Transportbandes (5,6) grösser ist als die Breite des Transportbandes.

4. Verfahren nach Anspruch 3, umfassend ein einzelnes Transportband wo die Stütze über jeder Seite des Transportbandes heraus reicht.

5. Verfahren nach einem der Ansprüche 3,4, umfassend zwei auf einigem Abstand voneinander gelegene Transportbänder (15,16), wobei die Stütze (13) sich dazwischen befindet.

6. Verfahren nach Anspruch 5, umfassend einen gemeinsamen Antriebsmechanismus (12) für die zwei Transportbänder.

7. Verfahren nach einem der vorhergehenden Ansprüche, wobei die Objekte Topfpflanzträger (7) umfassen mit einer grösseren Breite als die Breite des Transportbandes.

8. Verfahren nach Anspruch 7, wobei die Topfpflanzträger scheibengeformte Träger mit einem Zentralsitz (9) für eine Topfpflanze (10) umfassen.

9. Verfahren nach einem der vorhergehenden Ansprüche, wobei die Stütze mit angrenzenden senkrechten Verstärkungskörpern (4) versehen ist.

10. Verfahren nach einem der vorhergehenden Ansprüche, wobei die Stütze mit einem versenkten Abschnitt versehen ist.

11. Verfahren nach einem der vorhergehenden Ansprüche, das mit einer Zuführung oder einem Abfluss (27) mit den Fördergeräten verbunden ist.

## Revendications

1. Système comportant plusieurs transporteurs, chaque transporteur comportant un support plat allongé (3) avec, disposée dessus, une bande transporteuse mobile (5, 6) pour des objets, ladite bande transporteuse ayant une partie de retour (11), ainsi qu'un entraînement (12), ledit entraînement comportant un rouleau d'entraînement (15) et, dans chaque cas, un rouleau de pression (16, 17) de chaque côté dudit rouleau d'entraînement (15), lesdits rouleaux de pression étant montés sur un bras de pivot (18) et reliés l'un à l'autre, les arbres du rouleau d'entraînement et des rouleaux de pression étant essentiellement parallèles, lesdits rouleaux de pression (16, 17) étant des deux côtés dudit rouleau d'entraînement dans ladite partie de retour dans la direction de mouvement de ladite partie de retour (11) et ladite bande transporteuse (5, 6) étant disposée de telle sorte qu'elle est guidée autour dudit rouleau d'entraînement sur au moins 180° et autour de chacun desdits rouleaux de pression sur au moins 90°, et lesdits rouleaux d'entraînement (15, 16, 17) étant reliés de telle sorte que, lorsque la force de tension dans ladite partie de retour est accrue, cette partie déplace le rouleau de pression concerné à l'écart du rouleau d'entraînement et déplace l'autre rouleau de pression vers ledit rouleau d'entraînement, avec pour résultat que le dernier rouleau de pression presse la bande sur le rouleau d'entraînement avec plus de force, **caractérisé en ce qu'**un moteur d'entraînement commun (25) qui entraîne chacun desdits rouleaux d'entraînement (15) est prévu, et ledit entraînement pouvant être commandé individuellement pour chaque transporteur.

2. Système selon la revendication 1, dans lequel lesdits rouleaux de pression (16, 17) sont montés chacun sur un bras de pivot (18) et dans lequel lesdits bras de pivot sont liés l'un à l'autre par une barre de liaison (31).

3. Système selon l'une des revendications précédentes, dans lequel la largeur du support (3) dans la direction perpendiculaire à la direction de déplacement de ladite bande transporteuse (5, 6) est supérieure la largeur de ladite bande transporteuse.

4. Système selon la revendication 3, comportant une unique bande transporteuse, le support s'étendant au-delà de ladite bande transporteuse de chaque côté de celle-ci.

5. Système selon l'une des revendications 3, 4, comportant deux bandes transporteuses (5, 6) disposées à une certaine distance, le support (13) s'étendant entre elles.

6. Système selon la revendication 5, comportant un mécanisme d'entraînement commun (12) pour les deux bandes transporteuses.

7. Système selon l'une des revendications précédentes, dans lequel lesdits objets comportent des supports de plante en pot (7) avec une extension plus grande que la largeur de ladite bande transporteuse.

8. Système selon la revendication 7, dans lequel lesdits supports de plante en pot comportent des supports en forme de disque avec un siège central (9) pour une plante en pot (10).

9. Système selon l'une des revendications précédentes, dans lequel ledit support est pourvu de corps de renfort verticaux (4) qui y sont adjacents.

10. Système selon l'une des revendications précédentes, dans lequel le support est pourvu d'une partie renfoncée.

11. Système selon l'une des revendications précédentes, ayant une alimentation ou une évacuation (27) reliée aux dits transporteurs.
